# EUROPÄISCHE PATENTSCHRIFT

(11) **EP 2 893 313 B1**
(45) Veröffentlichungstag und Bekanntmachung des Hinweises auf die Patenterteilung: **05.10.2016**
(21) Anmeldenummer: 13756308.6
(22) Anmeldetag: 01.08.2013
(51) Int. Cl.: G01M 1/04

(54) **SPANNVORRICHTUNG MIT MITTENZENTRIERUNG**
CLAMPING DEVICE HAVING HUB CENTRING
DISPOSITIF DE SERRAGE À CENTRAGE

(30) Priorität: 10.09.2012 DE 102012017789
(43) Veröffentlichungstag der Anmeldung: 15.07.2015
(73) Patentinhaber: Haweka AG, 30938 Burgwedel (DE)
(72) Erfinder: WARKOTSCH, Dirk, 30938 Burgwedel/Wettmar (DE); JANZ, Tilo, 830938 Burgwedel (DE)
(74) Vertreter: Schleitzer, Dirk-Karsten
(86) Internationale Anmeldenummer: PCT/EP2013/002288
(87) Internationale Veröffentlichungsnummer: WO 2014/037074

(56) Entgegenhaltungen:
- DE-B3-102004 044 287
- US-A- 5 292 139

## Beschreibung

Die Erfindung betrifft eine Spannvorrichtung mit den Oberbegriffsmerkmalen von Anspruch 1. Eine solche Spannvorrichtung ist zur Mittenzentrierung zur Befestigung eines Fahrzeugrades auf der Welle einer Auswuchtmaschine vorgesehen und weist einen Anlageflansch zur Anlage einer Felge des Fahrzeugrades, mehrere am Anlageflansch radial bewegbar, vorzugsweise verschiebbar, geführte Zentrierelemente zum zentrierenden Eingriff in ein mittleres Zentrierloch der Felge und eine axial zum Anlageflansch bewegbar, vorzugsweise verschiebbar, geführte Spannhülse auf, wobei die Spannhülse und die Zentrierelemente derart kinematisch gekoppelt bzw. wirkungsverbunden sind, dass eine axiale Bewegung, insbesondere Verschiebung, der Spannhülse zu einer gekoppelten radialen Bewegung, insbesondere Verschiebung, aller Zentrierelemente führt.

Aus der DE 10 2004 044 287 B3 ist eine Schnellspannvorrichtung mit Mittenzentrierung zur Befestigung eines Fahrzeugrades auf der Welle einer Auswuchtmaschine bekannt. Die bekannte Schnellspannvorrichtung weist einen auf der Welle fest angeordneten Flansch zur reibschlüssigen Anlage einer Felge des Fahrzeugrades und Spannmittel zum Festziehen der Felge gegen den Flansch auf. Die Spannmittel können durch eine Spannmutter, insbesondere eine Schnellspannmutter, gebildet sein. Darüber hinaus ist eine Konusanordnung vorgesehen, die eine innere Bohrung zum Aufschieben auf die Welle der Auswuchtmaschine und eine äußere Zentrierfläche zum Eingriff in das Zentrierloch der Felge aufweist. Die Konusanordnung weist einen Konus mit einem sich von seiner Spitze erstreckenden Rohrteil auf, das mit seiner Innenwandung axial verschieblich auf der Welle oder einer Verlängerung davon angeordnet ist und auf dessen Außenwandung sich die Spannmittel zum Festziehen der Felge gegen den Flansch abstützen. Darüber hinaus weist die Konusanordnung ein äußeres Zentrierteil mit einer zylindrischen Außenfläche zum Eingriff in ein mittleres Zentrierloch der Felge und mit einer konischen Innenfläche auf, in die der Konus der Konusanordnung mit seiner konischen Außenfläche eingreift, wobei das Zentrierteil durch voneinander getrennte, radial bewegliche Zentrierelemente gebildet ist. Die Zentrierelemente bestehen aus sich radial erstreckenden Führungsteilen, die in sich radial im Inneren des Flansches erstreckenden Führungen radial verschieblich gehalten sind. Die Führungsteile haben die Form von radialen Flanschteilen, die in radialen Schlitzen in dem Flansch geführt sind. Dabei sind die Zentrierelemente durch Federmittel in radialer Richtung nach innen vorgespannt. Als Federmittel kann ein elastischer Ring vorgesehen sein.

Beim Aufspannen der Felge wird zunächst die Innenfläche des Zentrierlochs der Felge auf die zylindrische Außenfläche der Zentrierelemente aufgesetzt, wobei die zylindrische Außenfläche noch einen kleineren Durchmesser hat als die Innenfläche des Zentrierlochs aufgrund der Kraft des Federmittels. Danach wird die Spannmutter aufgeschraubt, bis die Felge gegen den Flansch festgezogen ist. Die Druckkräfte bewirken, dass das Rohrteil der Konusanordnung und damit auch der Konus in Richtung zur Felge gezogen wird, so dass die konische Außenfläche des Konus die radial beweglichen Zentrierelemente der Konusanordnung nach außen drückt, bis die zylindrische Außenfläche der Zentrierelemente zentrierend an der Innenfläche der Felge im Bereich des Zentrierlochs anliegt. Im Ergebnis wird die beim Festziehen der Felge gegen den Flansch aufgebrachte Kraft gleichzeitig zum Zentrieren des Rades benutzt, wobei die integrierte Mittenzentrierung der bekannten Spannvorrichtung auseinandergezogen wird.

Aus der US 5,292,139 A ist eine Spannvorrichtung für Werkzeugmaschinen bekannt, die es zulassen soll, ein Werkstück fest einzuspannen. Bei der bekannten Spannvorrichtung sind die Spannmittel über Antriebsmittel verstellbar, wobei jedes Antriebsmittel einerseits mit einem Spannmittel und andererseits mit einem gemeinsamen Kontrollring verbunden ist. Die Verbindung zwischen dem Kontrollring und dem Spannmittel ist lose bzw. unbefestigt ausgebildet und erfolgt über Vorsprünge an dem Antriebsmittel, die in einen formschlüssigen Kontakt mit dem Spannmittel einerseits und dem Kontrollring andererseits treten können. Die Spannmittel der bekannten Spannvorrichtung sind vorgesehen, um ein Werkstück zwischen den Spannmitteln festzuklemmen, so dass die Spannmittel entsprechend auch innenliegende Klemmflächen aufweisen. Radial außenliegende Stirnflächen der Spannmittel erfüllen dagegen keine Klemmfunktion.

Aufgabe der vorliegenden Erfindung ist es, die aus der DE 10 2004 044 287 B3 bekannte Spannvorrichtung weiterzubilden und eine Spannvorrichtung zur Verfügung zu stellen, die das Zentrieren und Festziehen der Felge gegen den Flansch weiter erleichtert und insbesondere in einfacher Weise die Übertragung einer hohen Zentrierkraft zulässt.

Die vorgenannte Aufgabe wird durch eine Spannvorrichtung mit den Merkmalen von Patentanspruch 1 gelöst. Vorteilhafte Ausgestaltungen der Erfindung sind Gegenstand der Unteransprüche.

Erfindungsgemäß ist wenigstens ein mit der Spannhülse und einem Zentrierelement gelenkig verbundener Spannhebel zur kinematischen Kopplung von Spannhülse und Zentrierelement vorgesehen. Vorzugsweise ist eine Hebelverbindung zwischen der Spannhülse und dem Zentrierelement über eine Öffnung in dem Anlageflansch ausgebildet, so dass der Spannhebel auf die von der Felge abgewandte Rückseite des Anlageflansches hindurchgeführt ist. Dies lässt einen sehr kompakten Aufbau der erfindungsgemäßen Spannvorrichtung zu. Gleichzeitig ist eine sichere Führung des Zentrierelementes an dem Anlageflansch gewährleistet. Zudem ist es durch die Öffnung in dem Anlageflansch möglich, den Spannhebel mit einem Ende an dem radial außenliegenden Ende des Zentrierelementes zu befestigen.

Erfindungsgemäß erfolgt die Kopplung zwischen der Spannhülse und den Zentrierelementen nicht über eine Konusanordnung, so wie dies in der DE 10 2004 044 287 B3 beschrieben ist, sondern über wenigstens einen Spannhebel, der nach dem Kniehebelprinzip mit dem Zentrierelement einerseits und der Spannhülse andererseits verbunden ist. Die erfindungsgemäß vorgesehene (Kniehebel-)Verbindung von Spannhülse und Zentrierelement ermöglicht die Übertragung größerer Zentrierkräfte beim Festziehen der Felge gegen den Anlageflansch, wobei das Festziehen der Felge gegen den Flansch gleichwohl bei geringem Kraftaufwand möglich ist.

Die erfindungsgemäße Spannvorrichtung weist vorzugsweise ein fest mit der Welle der Auswuchtmaschine verbindbares erstes Rohrteil auf, wobei der Anlageflansch insbesondere in axialer Richtung unbewegbar mit dem Rohrteil verbunden und die Spannhülse beispielsweise über wenigstens einen Gleitabschnitt axial bewegbar bzw. verschiebbar auf dem Rohrteil geführt ist. Durch Bewegen der Spannhülse relativ zu dem ortsfest an dem Rohrteil festgesetzten Anlageflansch in axialer Richtung kommt es zu einer zwangsweisen Betätigung des Zentrierelementes aufgrund der Hebelverbindung zwischen dem Zentrierelement und der Spannhülse, wobei das Zentrierelement radial verschoben wird.

Vorzugsweise sind vier bis acht, insbesondere sechs, Zentrierelemente vorgesehen, um die zum Zentrieren der Felge notwendige Zentrierkraft gleichmäßig übertragen zu können. Die Zentrierelemente der erfindungsgemäßen Spannvorrichtung lassen sich dabei erfindungsgemäß durch Bewegen der Spannhülse gleichzeitig und gekoppelt in radialer Richtung um denselben Betrag verstellen.

Bei einer bevorzugten Ausführungsform ist weiter vorgesehen, dass jedes Zentrierelement über wenigstens einen, vorzugsweise lediglich einen, Spannhebel mit der Spannhülse verbunden ist. Die kinematische Kopplung der Spannhülse mit jedem Zentrierelement über jeweils wenigstens einen Spannhebel trägt zu einer hohen Stabilität der erfindungsgemäßen Spannvorrichtung bei und führt zu einer geringen mechanischen Beanspruchung der Spannhebelverbindungen. Alternativ können auch mehrere Zentrierelemente über ein Kopplungsmittel, wie einen Gummiring oder dergleichen, kinematisch miteinander gekoppelt sein, wobei grundsätzlich bereits ein Spannhebel ausreicht, um eine gekoppelte Verstellung aller Zentrierelemente zu ermöglichen.

Zur Führung der Zentrierelemente kann der Anlageflansch auf der Seite der Felge sich über den gesamten Anlageflansch in radialer Richtung erstreckende Radialnuten bzw. nutförmige Vertiefungen aufweisen. Die Radialnuten erstrecken sich in radialer Richtung von einem eine mittlere Durchgangsöffnung für die Spannhülse begrenzenden Innenrand des Anlageflansches nach außen bis zu einem Außenrand des Anlageflansches und sind nach außen hin offen ausgebildet, wobei die Zentrierelemente mit zunehmender axialer Verstellung der Spannhülse in Richtung zur Felge, d. h. weg von dem Anlageflansch, in radialer Richtung nach außen verschoben und, vorzugsweise, bei Erreichen einer maximalen Zentrierstellung mit den radial außen liegenden Enden über den Umfangsrand des Anlageflansches nach außen überstehen. In der maximalen Zentrierstellung wird dann ein maximaler Abstand zwischen den Zentrierelementen und der Spannhülse erreicht.

Die Radialnuten können insbesondere T-förmig ausgebildet sein, um eine sichere Führung der entsprechend komplementär ausgebildeten Zentrierelemente zu gewährleisten. Die Zentrierelemente sind dadurch auch unverlierbar am Anlageflansch gehalten.

Der Spannwinkel zwischen einem Spannhebel und einem Zentrierelement kann bei Anordnung des Zentrierelementes in der maximalen Zentrierstellung, d. h. bei Erreichen einer maximal möglichen Radialverschiebung des Zentrierelementes nach außen, zwischen 10° und 20°, vorzugsweise ca. 15°, betragen. Bei Anordnung des Zentrierelementes in der minimalen Zentrierstellung des Zentrierelementes, d. h. bei Erreichen einer minimal möglichen Radialverschiebung, in der der Abstand zwischen dem Zentrierelement und der Spannhülse einen Minimalwert annimmt, kann dagegen zwischen 30° und 60°, vorzugsweise ca. 45°, betragen. Der Spannwinkel ist jeweils bezogen auf die Mittellängsachse eines Spannhebels und die Mittellängsachse des mit dem jeweiligen Spannhebel gekoppelten Zentrierelementes und/oder auf eine Radialebene, in der die Anlagefläche des Anlageflansches liegt. Die Festlegung eines maximalen Spannwinkels und/oder eines minimalen Spannwinkels entsprechend der zuvor genannten Winkelbereiche stellt sowohl die Übertragung einer ausreichend hohen Zentrierkraft über die Spannhebel auf die Zentrierelemente als auch eine ausreichend hohe Stabilität des Kniehebelsystems bei gleichzeitig geringem Kraftaufwand zum Festziehen der Felge gegen den Anlageflansch sicher.

Die erfindungsgemäße Spannvorrichtung ermöglicht vorzugsweise eine stufenlose Zentrierung von unterschiedlichen Felgen mit einem Mittellochdurchmesser von 30 bis 120 mm, vorzugsweise von 50 bis 100 mm, insbesondere von 54 bis 115 mm, und deckt so alle gängigen Felgentypen, insbesondere im Pkw-Bereich ab.

Darüber hinaus ist vorzugsweise vorgesehen, dass jedes Zentrierelement einen in den Radialnuten des Anlageflansches geführten Führungsabschnitt und einen radial innenliegenden gegenüber dem Führungsabschnitt in axialer Richtung zur Felge hin abgebogenen Zentrierabschnitt zum zentrierenden Eingriff in das mittlere Zentrierloch der Felge aufweist, wobei eine Außenfläche des Führungsabschnitts und eine Anlagefläche des Anlageflansches ausgefluchtet sein können oder wobei die Anlagefläche des Anlageflansches gegenüber der Außenfläche des Führungsabschnitts vorsteht. Bei der erstgenannten Ausführungsform kommen die Außenflächen der Führungsabschnitte und die Anlagefläche des Anlageflansches im festgezogenen Zentrierzustand der Felge gemeinsam gegen die Felge zur Anlage. Sofern die Anlagefläche des Anlageflansches gegenüber den Außenflächen der Führungsabschnitte vorsteht, kommen die Führungsabschnitte der Zentrierelemente bei der Radialverstellung der Zentrierelemente nicht mit der Felge in Kontakt, so dass ein geringer Kraftaufwand zum Festziehen und Zentrieren der Felge notwendig ist.

Sofern die Radialnuten ein besonderes, insbesondere T-förmiges, Querschnittsprofil aufweisen, kann das Zentrierelement im Bereich seines langgestreckten Führungsabschnitts eine komplementäre Querschnittsgeometrie aufweisen. Dies stellt eine stabile und sichere Führung der Zentrierelemente an dem Anlageflansch sicher.

Bei einer besonders bevorzugten Ausführungsform ist der Spannhebel mit einem Ende am radial außenliegenden Ende des Zentrierelementes bzw. am radial außenliegenden Ende dessen Führungsabschnitts und mit dem anderen Ende an der Spannhülse angelenkt. An dem radial außenliegenden Ende kann das Zentrierelement bzw. der Führungsabschnitt auf der von der Felge abgewandten Seite eine Abschrägung aufweisen, wobei der Spannhebel in der maximalen Zentrierstellung des Zentrierelementes gegen die Abschrägung anliegt und gegen das Zentrierelement abgestützt ist. Eine weitere radiale Spreizung der Zentrierelemente ist dann nicht mehr möglich. Dies trägt zu einer hohen Stabilität des erfindungsgemäßen Kniehebelsystems bei. Im Übrigen kann der Spannhebel durch eine längliche Öffnung in dem Anlageflansch auf die von der Felge abgewandte Rückseite des Anlageflansches hindurchgeführt sein. Dies lässt einen sehr kompakten Aufbau der erfindungsgemäßen Spannvorrichtung zu.

Es versteht sich, dass die zuvor beschriebenen Merkmale, die den Spannhebel und das Zentrierelement sowie deren Anordnung betreffen, vorzugsweise bei allen Spannhebel-Zentrierelement-Einheiten gleichermaßen verwirklicht sind.

Wie bereits oben beschrieben, kann ein fest mit der Welle der Auswuchtmaschine verbindbares erstes Rohrteil vorgesehen sein, wobei der Anlageflansch fest mit dem ersten Rohrteil verbunden und die Spannhülse über wenigstens einen Gleitabschnitt, vorzugsweise mehrere Gleitabschnitte, axial bewegbar auf dem ersten Rohrteil geführt ist. Innerhalb der Spannhülse kann ein in axialer Richtung relativ zur Spannhülse bewegbares und gegen das erste Rohrteil abstützbares Verstellmittel zur Voreinstellung der Zentrierstellung der Zentrierelemente vorgesehen sein, wobei als Verstellmittel insbesondere ein in die Spannhülse einschraubbares zweites Rohrteil vorteilhaft ist. Mit dem Verstellmittel ist es in einfacher Weise möglich, die Zentrierelemente, genauer gesagt deren Zentrierabschnitte, durch Radialverschiebung der Zentrierelemente auf einen Durchmesser einzustellen, der geringfügig kleiner ist als der Zentrierdurchmesser des Zentrierlochs der jeweiligen Felge. Damit wird der Aufwand zum Zentrieren und Festsetzen der Felge an dem Anlageflansch verringert.

Im Übrigen kann, wie aus dem Stand der Technik bereits bekannt, eine das erste Rohrteil durchsetzende Schraube zur Verbindung der Spannvorrichtung mit der Welle der Auswuchtmaschine vorgesehen sein. Erfindungsgemäß ist darüber hinaus vorzugsweise vorgesehen, dass ein Außengewinde der Schraube und ein Außengewinde des zweiten Rohrteils eine gleiche Gewindesteigung aufweisen, so dass die Schraube und das zweite Rohrteil gemeinsam in axialer Richtung verstellbar sind. Ein Mitnahmeprofilabschnitt am Schraubenkopf, beispielsweise ein Innensechskantabschnitt, kann dann durch das zweite Rohrteil hindurch für einen Schraubenschlüssel zugänglich sein, wobei das zweite Rohrteil an der innenliegenden Stirnseite eine Schlüsselöffnung für den Schraubenschlüssel aufweisen kann, deren Profil dem Mitnahmeprofil am Schraubenkopf entspricht. Im Ergebnis lassen sich damit die Befestigungsschraube und das zweite Rohrteil bedarfsweise mit einem Schlüssel gleichzeitig ein- bzw. ausschrauben, was die Montage vereinfacht.

Weiterhin sieht eine bevorzugte Ausgestaltung der erfindungsgemäßen Spannvorrichtung vor, dass die Spannhülse einen Außengewindeabschnitt zum Aufschrauben einer Spannschraube aufweist, wobei der Abstand zwischen dem Außengewindeabschnitt und axialen Stirnflächen an den Zentrierabschnitten der Zentrierelemente bei einer Anordnung der Zentrierelemente in der maximalen Zentrierstellung in axialer Richtung weniger als 40 mm, vorzugsweise zwischen 25 bis 35 mm, beträgt. Damit lassen sich auch Felgen mit großem Mittellochdurchmesser in einfacher Weise mit der erfindungsgemäßen Spannvorrichtung zentrieren und festspannen.

Die vorgenannten Aspekte und Merkmale der vorliegenden Erfindung sowie die nachfolgend beschriebenen Aspekte und Merkmale der vorliegenden Erfindung können unabhängig voneinander, aber auch in einer beliebigen Kombination realisiert werden. Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen
- Fig. 1 bis 3: schematische Schnittansichten einer erfindungsgemäßen Spannvorrichtung bei Anordnung von Zentrierelementen der Spannvorrichtung in einer minimalen Zentrierstellung (Fig. 1), in einer mittleren Zentrierstellung (Fig. 2) und in einer maximalen Zentrierstellung (Fig. 3) und
- Fig. 4 bis 6: perspektivische Ansichten der in den Fig. 1 bis 3 dargestellten Spannvorrichtung bei Anordnung der Zentrierelemente in der minimalen Zentrierstellung (Fig. 4), in einer mittleren Zentrierstellung (Fig. 5) und in der maximalen Zentrierstellung (Fig. 6).

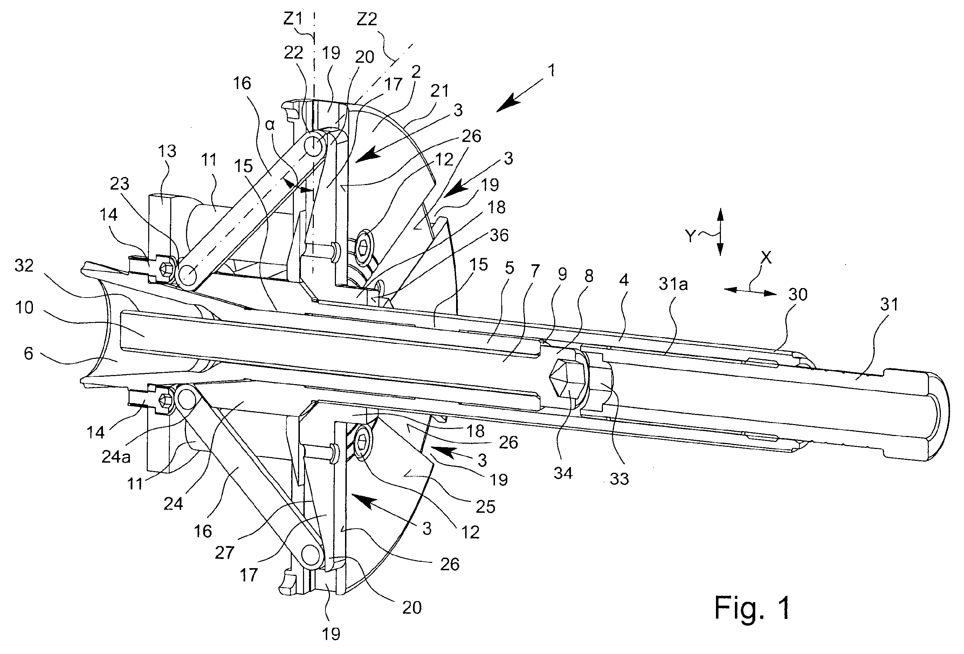

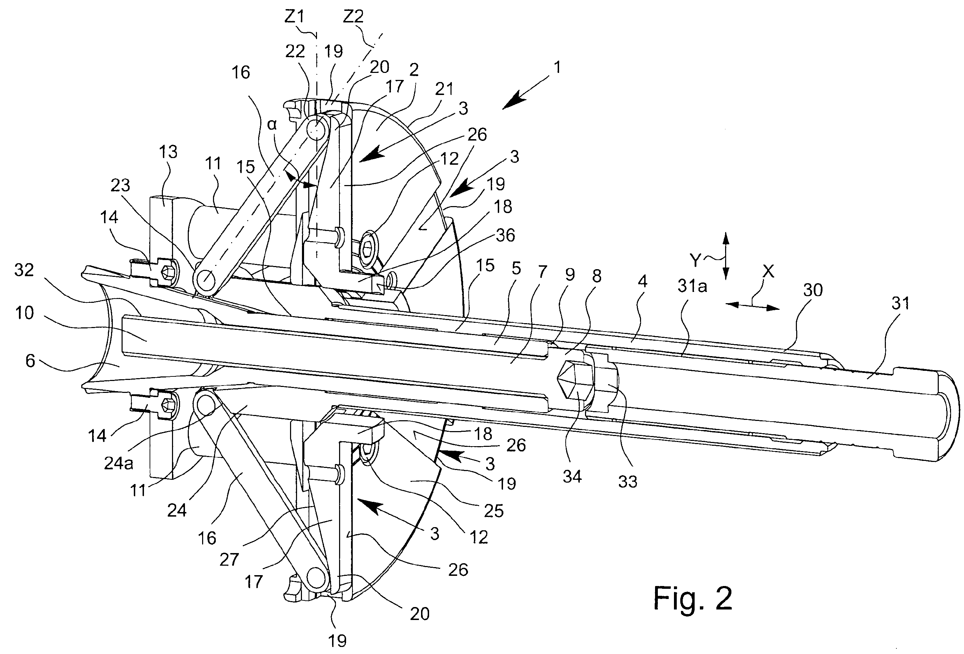

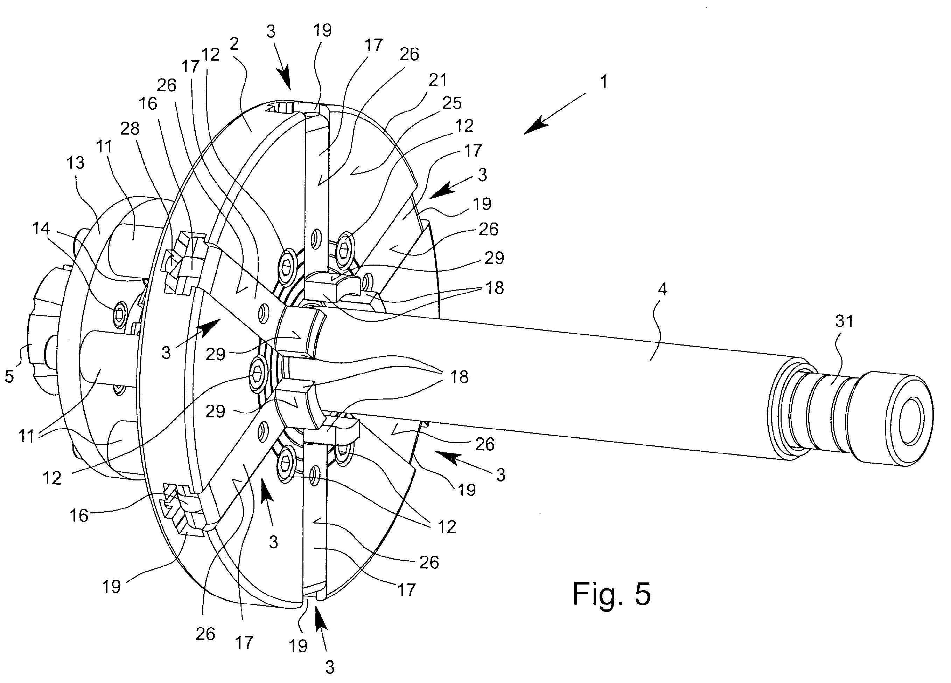

In den Fig. 1 bis 6 ist eine Spannvorrichtung 1 mit Mittenzentrierung zur Befestigung einer Felge eines nicht dargestellten Fahrzeugrades auf einer ebenfalls nicht dargestellten Welle einer Auswuchtmaschine gezeigt. Die Spannvorrichtung 1 weist einen Anlageflansch 2 zur Anlage der Felge des Fahrzeugrades und mehrere am Anlageflansch 2 in radialer Richtung Y bewegbar geführte Zentrierelemente 3 zum zentrierenden Eingriff in ein mittleres Zentrierloch der Felge auf. Im Übrigen ist eine in axialer Richtung X relativ zum Anlageflansch 2 bewegbar geführte Spannhülse 4 vorgesehen, wobei die Spannhülse 4 und die Zentrierelemente 3 derart kinematisch gekoppelt sind, dass eine axiale Bewegung der Spannhülse 4 zu einer gleichzeitigen gekoppelten Bewegung aller Zentrierelemente 3 in radialer Richtung Y führt.

Die Spannvorrichtung 1 weist ferner ein fest mit der Welle der Auswuchtmaschine verbindbares erstes Rohrteil 5 mit einem Innenkonus 6 auf, der komplementär zu einem Konus der Welle der Auswuchtmaschine ausgebildet ist. Mit einer Schraube 7, die sich in dem Rohrteil 5 erstreckt und mit ihrem Schraubenkopf 8 gegen eine axiale Stirnfläche 9 des Rohrteils 5 anliegt, lässt sich das Rohrteil 5 mit dem Konus der Welle der Auswuchtmaschine verbinden. Hierzu wird die Schraube 7 mit einem nicht dargestellten Schlüssel mit ihrem dem Schraubenkopf 8 abgewandten Gewindeende 10 in ein Innengewinde in dem Konus der Welle eingeschraubt, so dass das Rohrteil 5 fest an der Welle gehalten ist.

Der Anlageflansch 2 ist über Distanzstücke 11 und Schrauben 12 mit einem Ringteil 13 verschraubt, das seinerseits an dem Rohrteil 5 mit Schrauben 14 festgesetzt ist, und zwar an dem der Welle der Auswuchtmaschine zugewandten Ende des Rohrteils 5 im mittleren Bereich des Innenkonus 6. Der Anlageflansch 2 ist somit in axialer Richtung X und in radialer Richtung Y unbewegbar an dem Rohrteil 5 befestigt.

Die Spannhülse 4 weist zwei Gleitlagerabschnitte 15 auf, so dass die Spannhülse 4 in axialer Richtung X bewegbar auf der äußeren Mantelfläche des Rohrteils 5 geführt ist.

Wie sich weiter aus den Fig. 1 bis 6 ergibt, sind zur kinematischen Kopplung der Spannhülse 4 mit den Zentrierelementen 3 Spannhebeln 16 vorgesehen, wobei jedes Zentrierelement 3 über einen Spannhebel 16 gelenkig mit der Spannhülse 5 verbunden ist. Die Spannhebel 16 und die Zentrierelemente 3 bilden ein Kniehebelsystem, wobei eine Bewegung der Spannhülse 4 in axialer Richtung X relativ zum Anlageflansch 2 zu einer gekoppelten gemeinsamen Verstellbewegung aller Zentrierelemente 3 in radialer Richtung Y führt. Dies ergibt sich bei einem Vergleich der Fig. 1 bis 3 und 4 bis 6. Die dargestellte Spannvorrichtung lässt aufgrund des Kniehebelsystems die Übertragung einer hohen Zentrierkraft zu, wobei die beim Festziehen der Felge gegen den Anlageflansch 2 aufgebrachte Kraft gleichzeitig zum Zentrieren der Felge benutzt wird. Beim Festziehen der Felge gegen den Anlageflansch 2 wird die Spannhülse 4 mit einer nicht dargestellten Spannmutter in Richtung zur Felge gezogen, so dass die Zentrierelemente 3 nach außen verschoben werden, was schließlich zur Zentrierung und Festsetzung der Felge führt. Hierbei ist eine stufenlose Zentrierung von unterschiedlichen Felgen mit unterschiedlichen Mittellochdurchmessern möglich.

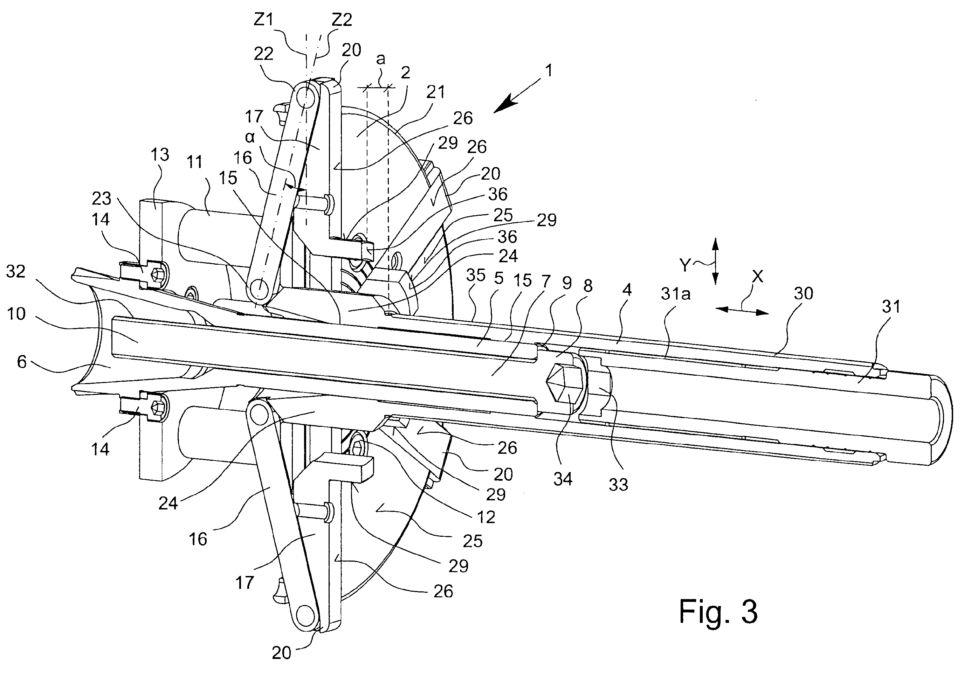

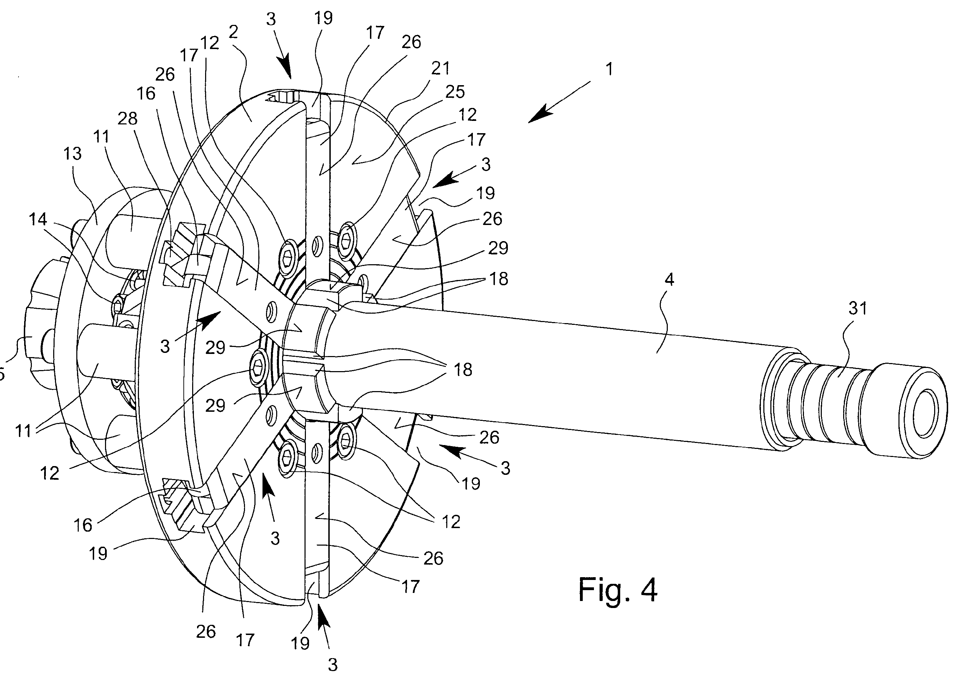

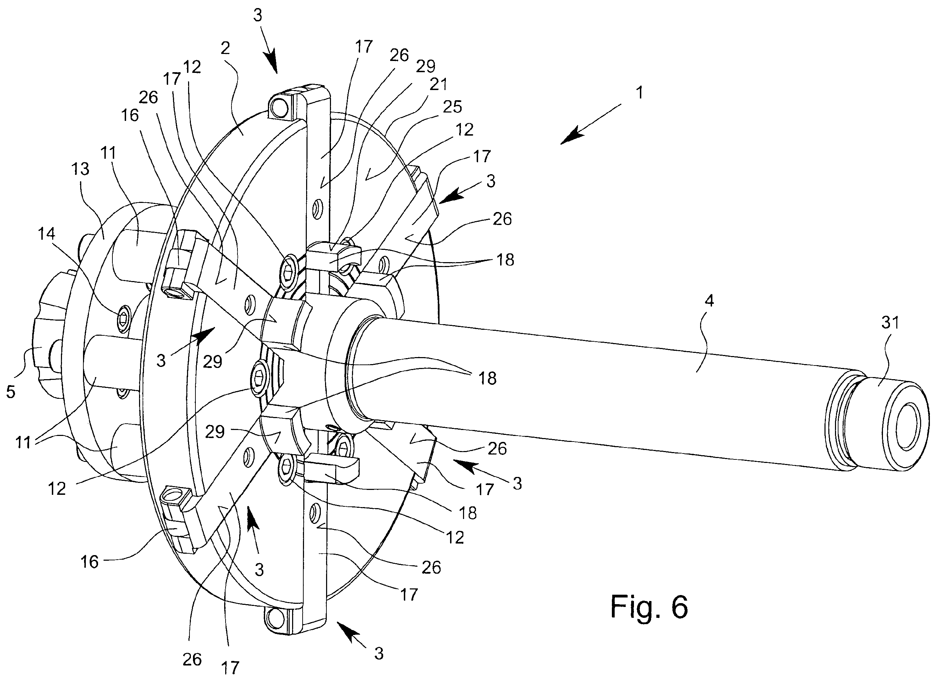

Die dargestellte Ausführungsform der Spannvorrichtung 1 weist sechs Zentrierelemente 3 auf. Jedes Zentrierelement 3 wird gebildet durch einen Führungsabschnitt 17 und einen gegenüber dem Führungsabschnitt 17 in axialer Richtung zur Felge hin abgewinkelten Zentrierabschnitt 18. Die Führungsabschnitte 17 sind in T-förmigen Radialnuten 19 des Anlageflansches 2 bewegbar geführt und weisen eine komplementäre Querschnittsgeometrie auf, so dass die Zentrierelemente 3 in radialer Richtung Y verschiebbar an dem Anlageflansch 2 geführt und in axialer Richtung X unverlierbar an dem Anlageflansch 2 gehalten sind. Hierbei lassen sich die Zentrierelemente 3 durch axiale Verstellbewegung der Spannhülse 4 aus einer minimalen Zentrierstellung, die in den Fig. 1 und 4 gezeigt ist, in eine maximale Zentrierstellung bewegen, die in den Fig. 3 und 6 gezeigt ist. In der maximalen Zentrierstellung erstrecken sich die Enden 20 der Zentrierelemente 17 über den Umfangsrand 21 des Anlageflansches 2 hinaus in radialer Richtung nach außen. Im Übrigen sind die Zentrierabschnitte 18 bei Erreichen der maximalen Zentrierstellung maximal von der Spannhülse 4 beabstandet und auf einen größtmöglichen Mittellochdurchmesser eingestellt.

Jeder Spannhebel 16 ist an seinem außenliegenden Ende 22 gelenkig mit dem Ende 20 eines Zentrierelementes 3 verbunden. Am innenliegenden Ende 23 ist jeder Spannhebel 16 am hinteren Ende der Spannhülse 4 angelenkt und liegt dabei in der minimalen Zentrierstellung der Zentrierelemente 3 gegen eine Schräge 24a einer Verdickung 24 der Spannhülse 4 an. Dies ist in Fig. 1 gezeigt. Damit ist eine einfache Verstellbewegung und hohe Kraftübertragung bei dem durch die Spannhebel 16 und die Zentrierelemente 3 gebildete Kniehebelsystem möglich.

Wie sich aus Fig. 1 ergibt, kann der Spannwinkel α zwischen jedem Spannhebel 16 und dem jeweils gekoppelten Zentrierelement 3 bei Anordnung der Zentrierelemente 3 in der minimalen Zentrierstellung, d. h. in der minimal radial nach außen verschobenen Stellung, vorzugsweise ca. 45° betragen. Aus Fig. 3 ergibt sich, dass der Spannwinkel α bei Anordnung des Zentrierelementes 3 in der maximalen Zentrierstellung, d. h. in einer maximal radial nach außen verschobenen Stellung, vorzugsweise ca. 15° beträgt. Zwischen den vorgenannten Winkelbereichen bei maximaler Zentrierstellung und minimaler Zentrierstellung der Zentrierelemente ist jeder Spannwinkel α stufenlos einstellbar. Der Spannwinkel α ist im Rahmen der vorliegenden Offenbarung jeweils bezogen auf die Mittellängsachse Z1 eines Zentrierelementes 3 und die Mittellängsachse Z2 eines Spannhebels 16.

Wie sich weiter aus den Fig. 1 bis 6 ergibt, können ebene Außenflächen 26 an den Führungsabschnitten 17 und die Anlagefläche 25 des Anlageflansches 2 ausgefluchtet sein. Die Anlagefläche 25 und die Außenflächen 26 der Zentrierelemente 3 liegen dann im zentrierten festgespannten Zustand der Felge gemeinsam gegen die Felge an.

Wie sich weiter aus den Fig. 1 bis 3 ergibt, kann das Zentrierelement 3 auf der von der Felge abgewandten Seite eine Abschrägung 27 aufweisen, gegen die der zugeordnete Spannhebel 16 in der maximalen Zentrierstellung des Zentrierelementes 3 zur Anlage kommt. Dies ist in Fig. 3 dargestellt. Der Spannhebel 16 ist dabei durch eine längliche Öffnung 28 in dem Anlageflansch 2 hindurchgeführt und an seinem Ende 23 mit der Spannhülse 4 verbunden.

Die Zentrierabschnitte 18 der Zentrierelemente 3 bilden zusammen eine zylindrische Außenfläche zum zentrierenden Eingriff in ein mittleres Zentrierloch der Felge. Im zentrierten und gegen den Anlageflansch 2 festgezogenen Zustand liegt die Felge stirnseitig gegen die Anlagefläche 25 des Anlageflansches 2 an, während gleichzeitig die als Ringsegmente ausgebildeten Zentrierabschnitte 18 mit kreisbogenförmigen radialen Außenflächen 29 gegen eine Innenfläche des Zentrierlochs anliegen.

Zum Festspannen der Felge wird auf einen Außengewindeabschnitt 30 der Spannhülse 4 eine Spannmutter aufgeschraubt, wobei die Druckkräfte bewirken, dass die Spannhülse 4 relativ zum Anlageflansch 2 in Richtung zur Felge bzw. in der Zeichnung nach rechts gezogen wird, so dass die Spannhebel 16 die Zentrierelemente 3 radial nach außen drücken, bis die Außenflächen 29 der Zentrierabschnitte 18 zentrierend an der Innenfläche des Zentrierlochs anliegen.

Innerhalb der Spannhülse 4 ist ein in axialer Richtung X relativ zur Spannhülse 4 bewegbares und gegen das erste Rohrteil 5 abstützbares zweites Rohrteil 31 vorgesehen, wobei das zweite Rohrteil 31 einen Außengewindeabschnitt 31 a und die Spannhülse 4 einen entsprechenden Innengewindeabschnitt aufweist und das zweite Rohrteil 31 in die Spannhülse 4 eingeschraubt ist. Das zweite Rohrteil 31 kann mit der Hand in die Spinnhülse 4 eingeschraubt werden, um dadurch eine Schnellverstellung der Zentrierelemente 3 zur Voreinstellung auf einen bestimmten Nlittellochdurchmesser der Felge zu ermöglichen. Das zweite Rohrteil 31 weist ferner eine Schlüsselöffnung 33 am stirnseitigen innenliegenden Ende auf, so dass von außen ein Schlüssel durch zweite Rohrteil 31 und die Schlüsselöffnung 33 hindurch in einen Innensechskantabschnitt 34 der Schraube 7 einsteckbar ist. Die Schlüsselöffnung 33 weist ebenfalls eine Sechskantkontur auf. Sofern ein Außengewinde 32 der Schraube 7 und der Außengewindeabschnitt 31a an dem zweiten Rohrteil 31 dieselbe Gewindesteigung aufweisen, lassen sich die Schraube 7 und das zweite Rohrteil 31 über den Schlüssel gemeinsam in axialer Richtung X verstellen.

Um auch Felgen mit großem Mittellochdurchmesser gegen den Anlageflansch 2 festziehen und zentrieren zu können, beträgt der Abstand a bei Anordnung der Zentrierelemente 3 in der maximalen Zentrierstellung zwischen dem Außengewindeabschnitt 30 der Spannhülse 4, der sich vorzugsweise bis zu dem verdickten Bereich 24 erstreckt, und axialen Stirnflächen 36 an den Zentrierabschnitten 18 der Zentrierelemente 3 in axialer Richtung X vorzugsweise weniger als 30 mm. Dies ist in Fig. 3 dargestellt.

## Patentansprüche

1. Spannvorrichtung (1) mit Mittenzentrierung zur Befestigung eines Fahrzeugrades auf der Welle einer Auswuchtmaschine, mit einem Anlageflansch (2) mit mehreren am Anlageflansch (2) radial bewegbar geführten Zentrierelementen (3) zum zentrierenden Eingriff in ein Zentrierloch der Felge des Fahrzeugrades und mit einer axial zum Anlageflansch (2) bewegbar geführten Spannhülse (4), wobei die Spannhülse (4) und die Zentrierelemente (3) derart kinematisch gekoppelt sind, dass eine axiale Bewegung der Spannhülse (4) zu einer radialen Bewegung der Zentrierelemente (3) führt, dadurch **gekennzeichnen,** dass wenigstens ein an der Spannhülse (4) und einem Zentrierelement (3) angelenkter Spannhebel (16) zur kinematischen Kopplung von Spannhülse (4) und Zentrierelement (3) vorgesehen ist, wobei die Spannhülse (4) beim Festziehen der Felge gegen den Anlageflansch (2) in Richtung zur Felge ziehbar und das Zentrierelement (3) dadurch nach außen verschiebbar ist und wobei das Zentrierelement (3) einen Zentrierabschnitt (18) mit einer radial außenliegenden Außenfläche (29) zum zentrierenden Anliegen gegen die Innenfläche des Zentrierlochs der Felge aufweist.

2. Spannvorrichtung (1) nach Anspruch 1, **dadurch gekennzeichnet, dass** jedes Zentrierelement (3) über wenigstens einen Spannhebel (16) mit der Spannhülse (4) verbunden ist.

3. Spannvorrichtung (1) nach Anspruch 1 oder 2, **dadurch gekennzeichnet, dass** der Anlageflansch (2) auf der Seite der Felge sich über den gesamten Anlageflansch (2) in radialer Richtung erstreckende Radialnuten (19) zur Führung der Zentrierelemente (3) aufweist.

4. Spannvorrichtung (1) nach einem der vorhergehenden Ansprüche, **dadurch gekennzeichnet, dass** der Spannwinkel zwischen dem Spannhebel (16) und dem Zentrierelement (3) bei Anordnung des Zentrierelementes (3) in der maximalen Zentrierstellung des Zentrierelementes (3) zwischen 10° und 20° beträgt.

5. Spannvorrichtung (1) nach einem der vorhergehenden Ansprüche, **dadurch gekennzeichnet, dass** der Spannwinkel zwischen dem Spannhebel (16) und dem Zentrierelement (3) bei Anordnung des Zentrierelementes (3) in der minimalen Zentrierstellung des Zentrierelementes (3) zwischen 30° und 60° beträgt.

6. Spannvorrichtung (1) nach einem der vorhergehenden Ansprüche, **dadurch gekennzeichnet, dass** jedes Zentrierelement (3) einen an dem Anlageflansch (2) geführten langgestreckten Führungsabschnitt (17) und einen radial innenliegenden gegenüber dem Führungsabschnitt (17) in axialer Richtung abgebogenen Zentrierabschnitt (18) zum zentrierenden Eingriff in das Zentrierloch aufweist, wobei eine Außenfläche (26) des Führungsabschnitts (17) und eine Anlagefläche (25) des Anlageflansches (2) ausgefluchtet sind oder wobei die Anlagefläche (25) des Anlageflansches (2) gegenüber der Außenfläche (26) des Führungsabschnitts (17) vorsteht.

7. Spannvorrichtung (1) nach einem der vorhergehenden Ansprüche, **dadurch gekennzeichnet, dass** der Spannhebel (16) mit einem Ende (22) am radial außenliegenden Ende (20) des Zentrierelements (3) und mit dem anderen Ende (23) an der Spannhülse (4) angelenkt ist.

8. Spannvorrichtung (1) nach einem der vorhergehenden Ansprüche, **dadurch gekennzeichnet, dass** ein fest mit der Welle der Auswuchtmaschine verbindbares erstes Rohrteil (5) vorgesehen ist, wobei der Anlageflansch (2) fest mit dem ersten Rohrteil (5) verbunden und die Spannhülse (4) über wenigstens einen Gleitabschnitt (15) axial bewegbar auf dem ersten Rohrteil (5) geführt ist, dass innerhalb der Spannhülse (4) ein in axialer Richtung relativ zur Spannhülse (4) bewegbares und gegen das erste Rohrteil (5) abstützbares Verstellmittel zur Voreinstellung der Zentrierstellung der Zentrierelemente (3) vorgesehen ist und dass ein in die Spannhülse (4) einschraubbares zweites Rohrteil (31) als Verstellmittel vorgesehen ist.

9. Spannvorrichtung (1) nach Anspruch 8, **dadurch gekennzeichnet, dass** eine das erste Rohrteil durchsetzende Schraube (7) zur Verbindung mit der Welle der Auswuchtmaschine vorgesehen ist, wobei ein Außengewindeabschnitt (35) der Schraube (7) und ein Außengewindeabschnitt (32) des zweiten Rohrteils (31) eine gleiche Gewindesteigung aufweisen und wobei die Schraube (7) und das zweite Rohrteil (31) gemeinsam in axialer Richtung verstellbar sind.

10. Spannvorrichtung (1) nach einem der vorhergehenden Ansprüche, **dadurch gekennzeichnet, dass** die Spannhülse (4) einen Außengewindeabschnitt (30) zum Aufschrauben einer Spannschraube aufweist und dass der axiale Abstand zwischen dem Außengewindeabschnitt (30) und axialen Stirnflächen (36) an Zentrierabschnitten (18) der Zentrierelemente (3) bei Anordnung der Zentrierelemente (3) in der maximalen Zentrierstellung weniger als 40 mm beträgt.

## Claims

1. A clamping device (1) with hub centering for securing a vehicle wheel on the shaft of a balancing machine, having an abutment flange (2) with a plurality of centering elements (3), which are guided in a radially movable manner on the abutment flange (2), for centering engagement in a centering hole in the rim of the vehicle wheel and having a clamping sleeve (4), which is guided in an axially movable manner with respect to the abutment flange (2), wherein the clamping sleeve (4) and the centering elements (3) are coupled together kinematically, such that an axial movement of the clamping sleeve (4) results in a radial movement of the centering elements (3), **characterized in that** at least one clamping lever (16), which is connected in a hinged manner to the clamping sleeve (4) and a centering element (3) for the kinematic coupling of the clamping sleeve (4) and the centering element (3) is provided, wherein the clamping sleeve (4) can be drawn during tightening of the rim against the abutment flange (2) in the direction of the rim and the centering element (3) can thus be moved outwards and wherein the centering element (3) has a centering section (18) with a radially external outer surface (29) for the centering abutment against the inner surface of the centering hole of the rim.

2. A clamping device (1) according to Claim 1, **characterized in that** each centering element (3) is connected by means of at least one clamping lever (16) with the clamping sleeve (4).

3. A clamping device (1) according to Claim 1 or 2, **characterized in that** the abutment flange (2) on the side of the rim has radial grooves (19) extending over the entire abutment flange (2) in the radial direction for guiding the centering elements (3).

4. A clamping device (1) according to any one of the preceding claims, **characterized in that** the clamping angle between the clamping lever (16) and the centering element (3) is between 10° and 20° in the arrangement of the centering element (3) in the maximum centering position of the centering element (3).

5. A clamping device (1) according to any one of the preceding claims, **characterized in that** the clamping angle between the clamping lever (16) and the centering element (3) is between 30° and 60° in the arrangement of the centering element (3) in the minimum centering position of the centering element (3).

6. A clamping device (1) according to any one of the preceding claims, **characterized in that** each centering element (3) has an elongated guide section (17) guided on the abutment flange (2) and a radially inward centering section (18) bent relative to the guide section (17) in the axial direction for centering engagement in the centering hole, wherein an outer surface (26) of the guide section (17) and an abutment surface (25) of the abutment flange (2) are aligned or wherein the abutment surface (25) of the abutment flange (2) protrudes relative to the outer surface (26) of the guide section (17).

7. A clamping device (1) according to any one of the preceding claims, **characterized in that** the clamping lever (16) is hinged with one end (22) on the radially outward end (20) of the centering element (3) and with the other end (23) on the clamping sleeve (4).

8. A clamping device (1) according to any one of the preceding claims, **characterized in that** a first pipe part (5) firmly connectable with the shaft of the balancing machine is provided, wherein the abutment flange (2) is firmly connected with the first pipe part (5) and the clamping sleeve (4) is guided in an axially movable manner via at least one sliding section (15) on the first pipe part (5), that within the clamping sleeve (4) an adjustment means movable in the axial direction relative to the clamping sleeve (4) and supportable against the first pipe part (5) is provided for pre-adjustment of the centering element (3) and that a second pipe part (31) which can be screwed into the clamping sleeve (4) is provided as an adjustment means.

9. A clamping device (1) according to Claim 8, **characterized in that** a screw (7) pushing through a first pipe part is provided for connection with the shaft of the balancing machine, wherein an external thread section (35) of the screw (7) and an external thread section (32) of the second pipe part (31) have a same thread pitch and wherein the screw (7) and the second pipe part (31) are jointly adjustable in the axial direction.

10. A clamping device (1) according to any one of the preceding claims, **characterized in that** the clamping sleeve (4) has an external thread section (30) for unscrewing a clamping screw and that the axial distance between the external thread section (30) and the axial end faces (36) of centering sections (18) of the centering elements (3) in the arrangement of the centering elements (3) in the maximum centering position is less than 40 mm.

## Revendications

1. Dispositif de serrage (1) avec moyen de centrage pour la fixation d'une roue de véhicule sur l'arbre d'une machine d'équilibrage, avec une bride d'appui (2) avec plusieurs éléments de centrage (3) guidés de façon mobile radialement sur la bride d'appui (2) pour l'engrènement de centrage dans un orifice de centrage de la jante et avec une douille de serrage (4) guidée de façon mobile axialement par rapport à la bride d'appui (2), la douille de serrage (4) et les éléments de centrage (3) étant couplés de façon cinématique de telle sorte qu'un mouvement axial de la douille de serrage (4) conduit à un mouvement radial des éléments de centrage (3), **caractérisé en ce qu'**il est prévu au moins un levier de serrage (16) articulé sur la douille de serrage (4) et sur un élément de centrage (3) pour l'accouplement cinématique de la douille de serrage (4) et de l'élément de centrage (3), la douille de serrage (4) pouvant, lors de la traction ferme exercée sur la jante, être tirée contre la bride d'appui (2) en direction de la jante, et l'élément de centrage (3) pouvant ainsi être déplacé vers l'extérieur, et l'élément de centrage (3) présentant un tronçon de centrage (18) avec une face extérieure (29) située à l'extérieur radialement pour l'appui de centrage contre la face intérieure de l'orifice de centrage de la jante.

2. Dispositif de serrage (1) selon la revendication 1, **caractérisé en ce que** chaque élément de centrage (3) est raccordé à la douille de serrage (4) par le biais d'au moins un levier de serrage (16).

3. Dispositif de serrage (1) selon la revendication 1 ou 2, **caractérisé en ce que** la bride d'appui (2) présente, sur le côté de la jante, des rainures radiales (19) s'étendant sur la totalité de la bride d'appui (2) dans la direction radiale pour guider les éléments de centrage (3).

4. Dispositif de serrage (1) selon l'une des revendications précédentes, **caractérisé en ce que** l'angle de serrage entre le levier de serrage (16) et l'élément de centrage (3) est compris entre 10° et 20° dans le cas de l'agencement de l'élément de centrage (3) dans la position de centrage maximale de l'élément de centrage (3).

5. Dispositif de serrage (1) selon l'une des revendications précédentes, **caractérisé en ce que** l'angle de serrage entre le levier de serrage (16) et l'élément de centrage (3) est compris entre 30° et 60° dans le cas de l'agencement de l'élément de centrage (3) dans la position de centrage minimale de l'élément de centrage (3).

6. Dispositif de serrage (1) selon l'une des revendications précédentes, **caractérisé en ce que** chaque élément de centrage (3) présente un tronçon de guidage (17) allongé guidé sur la bride d'appui (2) et un tronçon de centrage (18) situé intérieurement radialement et courbé dans la direction axiale par rapport au tronçon de guidage (17) pour l'engrènement de centrage dans l'orifice de centrage, une face extérieure (26) du tronçon de guidage (17) et une face d'appui (25) de la bride d'appui (2) étant alignées, ou la face d'appui (25) de la bride d'appui (2) dépassant par rapport à la face extérieure (26) du tronçon de guidage (17).

7. Dispositif de serrage (1) selon l'une des revendications précédentes, **caractérisé en ce que** le levier de serrage (16) est articulé par une extrémité (22) sur l'extrémité (20) de l'élément de centrage (3) située extérieure radialement, et par l'autre extrémité (23) sur la douille de serrage (4).

8. Dispositif de serrage (1) selon l'une des revendications précédentes, **caractérisé en ce qu'**il est prévu une première partie tubulaire (5) pouvant être raccordée fixement à l'arbre de la machine d'équilibrage, la bride d'appui (2) étant raccordée fixement à la première partie tubulaire (5), et la douille de serrage (4) étant guidée, par le biais d'au moins un tronçon de glissement (15), de façon mobile axialement sur la première partie tubulaire (5), **en ce que**, à l'intérieur de la douille de serrage (4), il est prévu un moyen d'ajustage, mobile dans la direction axiale par rapport à la douille de serrage (4) et pouvant s'appuyer contre la première partie tubulaire (5), pour le préréglage de la position de centrage des éléments de centrage (3), et **en ce qu'**il est prévu, en tant que moyen d'ajustage, une deuxième partie tubulaire (31) pouvant être vissée dans la douille de serrage (4).

9. Dispositif de serrage (1) selon la revendication 8, **caractérisé en ce qu'**il est prévu une vis (7) traversant la première partie tubulaire pour le raccordement à l'arbre de la machine d'équilibrage, un tronçon fileté extérieur (35) de la vis (7) et un tronçon fileté extérieur (32) de la deuxième partie tubulaire (31) présentant un pas de vis identique, et la vis (7) et la deuxième partie tubulaire (31) pouvant être réglées conjointement dans la direction axiale.

10. Dispositif de serrage (1) selon l'une des revendications précédentes, **caractérisé en ce que** la douille de serrage (4) présente un tronçon fileté extérieur (30) pour le vissage d'une vis de serrage, et **en ce que** la distance axiale entre le tronçon fileté extérieur (30) et des faces frontales (36) axiales sur des tronçons de centrage (18) des éléments de centrage (3) est inférieure à 40 mm dans le cas de l'agencement des éléments de centrage (3) dans la position de centrage maximale.
